Europäisches Patentamt

European Patent Office

Office européen des brevets

(11) Veröffentlichungsnummer: **0 387 843**
**A1**

## (12) EUROPÄISCHE PATENTANMELDUNG

(21) Anmeldenummer: **90104828.0**

(22) Anmeldetag: **14.03.90**

(51) Int. Cl.⁵: **F24J 2/10**

(30) Priorität: **15.03.89 DE 3908363**

(43) Veröffentlichungstag der Anmeldung:
**19.09.90 Patentblatt 90/38**

(84) Benannte Vertragsstaaten:
**DE ES FR GB GR IT**

(71) Anmelder: **FRAUNHOFER-GESELLSCHAFT
ZUR FÖRDERUNG DER ANGEWANDTEN
FORSCHUNG E.V.
Leonrodstrasse 54
D-8000 München 19(DE)**

(72) Erfinder: **Goetzberger, Adolf, Prof.-Dr.
Friedhofstrasse 13
D-7802 Merzhausen(DE)**

(54) **Solarkollektor.**

(57) Solarkollektor zur Umwandlung von Solarstrahlung, wobei der Absorber (1) zweiseitig bestrahlbar ist und über einer Anordnung aus mehreren parallel zueinander verlaufenden rinnenförmigen Spiegeln (3) angeordnet ist und der Absorber diese Anordnung teilweise überdeckt, wodurch die Spiegel den neben dem Absorber einfallenden Teil der Solarstrahlung auf die Unterseite des Absorbers umlenken. Gekennzeichnet ist die Erfindung durch eine transparente Wärmeisolation (2), die den Absorber umgibt.

Fig.1

EP 0 387 843 A1

## Solarkollektor

Die Erfindung betrifft einen Solarkollektor gemäß Oberbegriff des Anspruches 1, wie er aus der DE-OS 25 47 351 bekannt ist und der einen Absorber aufweist, der oberhalb rinnenförmiger Reflektoren angeordnet ist und diese teilweise überdeckt.

Aufgabe der Erfindung ist es nun, einen Solarkollektor gem. dem Oberbegriff des Anspruches 1 dabei als Einrichtung zur Gewinnung von Wärme zu benutzen und dabei den Wirkungsgrad wesentlich zu erhöhen und insbesondere die Bauhöhe des Solarkollektors zu reduzieren.

Dies wird erfindungsgemäß durch einen Solarkollektor nach Anspruch 1 erreicht. Vorteilhafte Ausgestaltungen der Erfindung sind in den Unteransprüchen gekennzeichnet. Der Vorteil der Erfindung wird insbesondere darin gesehen, daß die Leerlauftemperatur (Differenz zur Umgebungstemperatur) etwa verdoppelt werden kann.

Der Solarkollektor nach den Ansprüchen 2 und 3 ist besonders einfach herzustellen, da Kunststoff oder Blech ein sehr billiger Werkstoff ist.

Der Vorteil der Strukturen in der Isolationsschicht besteht darin, daß die Strahlung mehrfach gebrochen wird und zum Absorber gelenkt wird. Die Wärmedämmung der Kanten der Absorber ist relativ wichtig, da die Strahlungsverluste entsprechend den Temperaturpotentiallinien kreisförmig sind, während sie in der Fläche des Absorbers nur horizontal verlaufen.

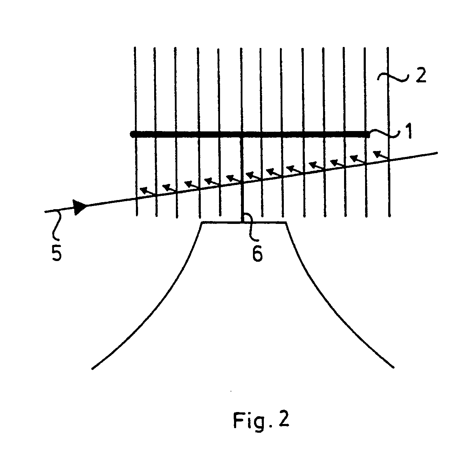

Die Maßnahme nach Anspruch 6 wird anhand der Figur 2 später erläutert.

Anspruch 8 gibt eine vorteilhafte Dimensionierung der Isolationsschicht an.

Anspruch 9 bewirkt, daß die Isolationsschicht nicht zu heiß wird, falls im Absorber keine Wärme entnommen wird und der Absorber höhere Temperaturen als 80° erreicht.

Es ist gemäß Anspruch 11 vorteilhaft, für einen besonders hohen Wirkungsgrad den Zwischenraum zwischen Absorber und Isolation zu evakuieren.

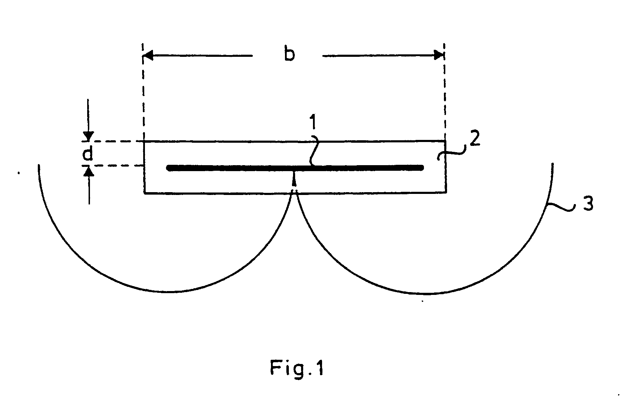

Die Erfindung wird nunmehr anhand der Figuren 1 - 2 beschrieben.

Figur 1 zeigt einen Schnitt durch eine erfindungsgemäße Anordnung nach Anspruch 1. Figur 2 zeigt einen Strahlengang durch die Isolation.

In Fig. 1 ist 1 der Absorber, 2 die transparente Isolation, 3 der Spiegel. Der Lichtumlenkspiegel 3 ist eine Rinne mit kreisförmigem Querschnitt, deren Radius gleich der halben Absorberbreite ist und deren Zentrum die Absorberkante darstellt. Es zeigt sich, daß diese Struktur alles von vorne am Absorber vorbei einfallende Licht auf die Rückseite umlenkt. Die Abschlußflächen der Rinnen sind als ebene Spiegel ausgebildet.

Wichtig ist, daß die transparente Isolation den Absorber so eng wie möglich umgibt.

Weiter ist es wichtig, daß die Isolation aus absorbersenkrechten Strukturen (z.B. Wabenstrukturen) besteht. Da nämlich die Spiegelrinnen idealerweise mit einer Spitze an der Unterseite der Absorber enden müßten, dies aber wegen der Dikke der Isolation nicht möglich ist, werden durch diese Struktur Lichtverluste minimiert.

Weiterhin kann oberhalb der Isolation 2 über die gesamte Breite und Länge des Spiegels 3 eine (in der Figur 1 nicht dargestellte) transparente Schutzschicht gegen Witterungseinflüsse angebracht werden.

Ein weiterer wichtiger Parameter ist die Dicke der Isolation. Aus Gründen der Wärmedämmung muß die Isolation etwa um den Betrag ihrer Dicke seitlich über den Absorber hinausragen und auch an beiden Stirnkanten. Dieser Teil verursacht, ebenfalls durch Mehrfachreflektionen, optische Verluste. Die Absorberkante bringt aber auch thermische Verluste, denn die Temperaturpotentiallinien sind dort kreisförmig, während sie in der Fläche des Absorbers horizontal verlaufen. Der Wärmefluß ist also durch eine Zylindergeometrie bestimmt.

Fig. 2 zeigt, wie ein schräg verlaufender Strahl 5, der bei homogener Isolation entweichen würde, durch Mehrfachreflektionen stark geschwächt wird, wobei die reflektierten Strahlen zum Absorber gelenkt werden.

Als weitere Variation kann eine zum Absorber senkrechte Folie 6 als reflektierende Folie ausgeführt werden. Damit kommt man einer idealen Spiegelspitze nahe. Dabei ist darauf zu achten, daß diese Folie keine nennenswerte Wärmeleitung besitzt, d.h. sehr dünn ist. Zur Verbesserung der Wärmedämmung kann zwischen transparenter Isolation und Absorber ein Luftspalt vorgesehen werden. Außerdem kann das Ensemble Absorber-Isolation auf einen erniedrigten Luftdruck evakuiert werden.

Neben den absorbersenkrechten, konvektionsunterdrückenden Materialien eignen sich auch klare, durchsichtige Materialien für dieses Prinzip, z.B. monolithisches Aerogel. Auch konventionelle, selektiv beschichtete Absorber mit Glasabdeckung können eingesetzt werden.

### Ansprüche

1. Solarkollektor zur Umwandlung von Solarstrahlung, wobei ein fluiddurchströmter Absorber (1) zweiseitig bestrahlbar ist und über einer Anordnung aus mehreren parallel zueinander verlaufenden rinnenförmigen Spiegeln (3) derart angeordnet ist, daß der Absorber je zur Hälfte über zwei benachbarte Spiegelöffnungen ragt und wobei die Breite b des Absorbers etwa derjenigen der rinnenförmigen Spiegel (3) entspricht, wobei die Spiegel den neben dem Absorber einfallenden Teil der Solarstrahlung auf die Unterseite des Absorbers umlenken,

**dadurch gekennzeichnet,**

daß der Absorber (1) allseitig mit einer transparenten Wärmedämmschicht (2) umschlossen ist.

2. Solarkoilektor nach Anspruch 1,

**dadurch gekennzeichnet,**

daß der Spiegel eine Rinne mit kreisförmigem Querschnitt ist.

3. Solarkollektor nach Anspruch 2,

**dadurch gekennzeichnet,**

daß der Spiegel aus einer Rinne aus Kunststoff oder Blech besteht, die mit einer Spiegelfolie ausgekleidet ist.

4. Solarkollektor nach Anspruch 1,

**dadurch gekennzeichnet,**

daß die Isolation eine Struktur aufweist, die senkrecht zum Absorber ist.

5. Solarkollektor nach Anspruch 4,

**dadurch gekennzeichnet,**

daß die Isolation eine Wabenstruktur aufweist.

6. Solarkollektor nach den Ansprüchen 1 - 5,

**dadurch gekennzeichnet,**

daß die Isolation an den Kanten des Absorbers um etwa die Dicke der Isolation hinausragt.

7. Solarkollektor nach den Ansprüchen 1 - 6,

**dadurch gekennzeichnet,**

daß auf der Rückseite des Absorbers in der Mitte der Isolation (3) eine nicht wärmeleitende Folie (6) senkrecht zum Absorber und parallel zum Spiegel angeordnet ist.

8. Solarkollektor nach den Anspruchen 1 - 7, **dadurch gekennzeichnet,**

daß das Verhältnis von Absorberbreite zur Isolationsdicke $\frac{b}{d} \geqslant$ ist und d etwa 2 - 10 cm beträgt.

9. Solarkollektor nach den Ansprüchen 1 - 8,

**dadurch gekennzeichnet,**

daß zwischen Absorber und Isolation ein Luftspalt von 1 - 2 cm Weite vorgesehen ist.

10. Solarkollektor nach Anspruch 9,

**dadurch gekennzeichnet,**

daß der Raum zwischen der Isolation 3 und dem Absorber 2 evakuiert ist.

11. Solarkollektor nach den Ansprüchen 1 - 9, **dadurch gekennzeichnet,**

daß auf der Isolation bzw. der Außenseite des Kollektors eine transparente Schutzschicht gegen Witterungseinflüsse angeordnet ist.

Fig.1

Fig. 2

Europäisches Patentamt

**EUROPÄISCHER RECHERCHENBERICHT**

Nummer der Anmeldung

EP 90 10 4828

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 974 824 (SMITH)<br>* Spalte 3, Zeilen 17-21,33-38; Spalte 7, Zeilen 19-46; Figuren 2,15,17 * | 1,9 | F 24 J 2/10 |
| Y | | 2,3,10 | |
| | --- | | |
| D,Y | DE-A-2 547 351 (ESHELMAN)<br>* Seite 6, Zeile 16 - Seite 7, Zeile 11; Seite 8, Zeile 22 - Seite 9, Zeile 3; Figuren 2,5 * | 2,3 | |
| A | | 7 | |
| | --- | | |
| Y | US-A-4 230 095 (WINSTON)<br>* Spalte 2, Zeile 57 - Spalte 3, Zeile 4; Figur 1 * | 10 | |
| | --- | | |
| A | EP-A-0 079 976 (YAZAKI CORP.)<br>* Seite 2, Zeilen 18-22; Figur 3 * | 1,4,5 | |
| | --- | | |
| A | US-A-4 038 964 (DREW)<br>* Spalte 2, Zeilen 56-62; Figur 1 * | 1,6 | |
| | --- | | RECHERCHIERTE SACHGEBIETE (Int. Cl.5) |
| A | CH-A- 596 448 (TOSI)<br>* Spalte 1, Zeile 54 - Spalte 2, Zeile 27; Figuren 1,2,7 * | 1 | F 24 J |
| | --- | | |
| A | US-A-4 561 424 (GILL et al.)<br>* Spalte 3, Zeile 60 - Spalte 4, Zeile 12; Figur 1 * | 1 | |
| | --- | | |
| A | US-A-3 994 279 (BARAK)<br>* Spalte 3, Zeile 67 - Spalte 4, Zeile 24; Figur 1 * | 1 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 05-06-1990 | BELTZUNG F.C. |